# EUROPÄISCHE PATENTSCHRIFT

(11) **EP 4 033 714 B1**
(45) Veröffentlichungstag und Bekanntmachung des Hinweises auf die Patenterteilung: **14.06.2023**
(21) Anmeldenummer: 21153285.8
(22) Anmeldetag: 25.01.2021
(51) Int. Cl.: H04L 69/14, H04L 69/40, H04L 67/12

(54) **VERFAHREN ZUR DATENÜBERTRAGUNG ZWISCHEN ZWEI DIGITAL STEUERBAREN FAHRZEUGKOMPONENTEN**
METHOD FOR DATA TRANSMISSION BETWEEN TWO DIGITALLY CONTROLLABLE VEHICLE COMPONENTS
PROCÉDÉ DE TRANSFERT DE DONNÉES ENTRE DEUX COMPOSANTS DE VÉHICULE À COMMANDE NUMÉRIQUE

(43) Veröffentlichungstag der Anmeldung: 27.07.2022
(73) Patentinhaber: ZKW Group GmbH, 3250 Wieselburg (AT)
(72) Erfinder: Kieslinger, Dietmar, 2604 Theresienfeld (AT); Rottmann, Holger, 2700 Wiener Neustadt (AT)
(74) Vertreter: Patentanwaltskanzlei Matschnig & Forsthuber OG

(56) Entgegenhaltungen:
- US-A1- 2012 109 407
- US-A1- 2019 097 932
- US-B1- 7 068 675

## Beschreibung

Die Erfindung betrifft ein Verfahren zur Datenübertragung zwischen zwei digital steuerbaren Fahrzeugkomponenten, umfassend eine erste und eine zweite Fahrzeugkomponente, wobei jede Fahrzeugkomponente eine elektronische Steuereinheit mit einer Überwachungseinheit, zwei Kommunikationsschnittstellen, nämlich einer ersten und einer zweiten Kommunikationsschnittstelle und eine Schnittstellenweiche zur Festlegung einer Aufteilung der zu übertragenden Daten zwischen den zwei Kommunikationsschnittstellen, aufweist, wobei die Überwachungseinheit zur Überwachung der Kommunikationsschnittstellen eingerichtet ist, wobei die beiden Fahrzeugkomponenten zum Austausch von Daten miteinander verbunden sind, indem zwei Datenverbindungsleitungen vorgesehen sind, wobei die ersten Kommunikationsschnittstellen durch eine erste Datenverbindungsleitung und die zweiten Kommunikationsschnittstellen durch eine zweite Datenverbindungsleitung miteinander verbunden sind.

Aus dem Stand der Technik sind digital miteinander kommunizierende Fahrzeugkomponenten bereits seit langer Zeit bekannt geworden. Hierzu sind die Fahrzeugkomponenten zumeist mit einer drahtleitungsgebundenen Datenverbindungsleitung verbunden, über die Fahrzeugkomponenten Daten austauschen können. Bei der Datenverbindungsleitung handelt es sich typischerweise um eine Leitung eines Datenbussystems. Auch ist aus dem Stand der Technik bekannt geworden, solche Leitungen redundant auszulegen. Damit kann ein Ausfall einer Leitung durch die Verwendung einer verbleibenden Leitung kompensiert werden. Nachteilig bei solchen redundanten Systemen ist, dass die verbleibende Leitung mit größerer Wahrscheinlichkeit überlastet werden kann. Der unkontrollierte Ausfall von Daten kann bei Fahrzeuganwendungen sowohl die Sicherheit der in einem Fahrzeug befindlichen Personen, als auch die Sicherheit von in der Fahrzeugumgebung befindlichen Personen, gefährden. Aus den Dokumenten US 2019/097932 A1 sowie US 7 068 675 B1 sind jeweils Verfahren zur Datenübertragung zwischen zwei digital steuerbaren Fahrzeugkomponenten bekannt geworden. Eine Aufgabe der Erfindung besteht daher darin ein Verfahren zur Datenübertragung zwischen zwei digital steuerbaren Fahrzeugkomponenten zu schaffen, das eine erhöhte Sicherheit ermöglicht.

Diese Aufgabe wird mit einem Verfahren der eingangs genannten Art gelöst, welches erfindungsgemäß die folgenden Schritte umfasst:
a) Laufendes Überprüfen der Datenverbindung zwischen den Fahrzeugkomponenten mittels den dafür vorgesehenen Überwachungseinheiten und Unterscheiden zwischen einem Normalzustand und einem Fehlerzustand, wobei in einem Normalzustand beide Datenverbindungsleitungen mit ihrer Nennbandbreite zur Verfügung stehen, und in einem Fehlerzustand der Datenaustausch über eine der beiden Datenverbindungsleitungen mangels Bestehens einer Datenverbindung ausfällt,
b) bei Feststellen von Normalzustand, Aufteilen eines zwischen den Fahrzeugkomponenten auszutauschenden Normdatenstromes auf die beiden Datenverbindungsleitungen mittels der Schnittstellenweiche, um die Bandbreite beider Datenverbindungsleitungen gleichzeitig zu nutzen und eine etwaige Einschränkung, insbesondere einen Ausfall, einer Datenverbindungsleitung aufgrund der Feststellung eines Datenausfalles, sofort feststellbar zu machen, wobei der Normdatenstrom sicherheitsrelevante Daten als auch sicherheitsirrelevante Daten umfasst, und bei den Fahrzeugkomponenten Informationen hinsichtlich der Struktur des Normdatenstromes vorliegen, sodass ein Datenausfall durch Vergleich mit der bekannten Struktur des Normdatenstromes festgestellt wird,
c) bei Feststellen eines Fehlerzustandes einer Datenverbindungsleitung Entbindung der fehlerhaften Datenverbindungsleitung von der Übertragung des Normdatenstromes durch Änderung der Aufteilung mittels der Schnittstellenweiche und Änderung der Ansteuerung der verbleibenden Datenverbindungsleitung dahingehend, dass die Übertragung der sicherheitsrelevanten Daten gegenüber der Übertragung der sicherheitsirrelevanten Daten priorisiert wird.

Unter dem Ausdruck, dass die Überprüfung der Datenverbindung "laufend" erfolgt, wird eine Überprüfung verstanden, bei der ausreichend kurze Zeitintervalle bei der Prüfung vorgesehen sind, um einen Datenverlust festzustellen. In Abhängigkeit von der Datenübertragungsrate kann dieses Zeitintervall variieren. Die Fachperson ist in der Lage, ein für den spezifischen Anwendungsfall passendes Zeitintervall festzulegen. Unter dem Begriff "Normdatenstrom" wird ein Datenstrom verstanden, der sicherheitsrelevante Daten als auch sicherheitsirrelevante Daten umfasst. Nähere Informationen zur Sicherheitsrelevanz von Daten werden nachfolgend erörtert. Kriterien zum Feststellen von Fehlerfreiheit des Normdatenstroms können über unterschiedliche Ebenen der Datenkommunikation festgelegt werden. So ist z.B. denkbar, dass im Sinne des Open System Interconnection (OSI) - Layermodells bereits auf der hardwarenahen Ebene 1 oder 2 Abweichungen vom Normalbetrieb erkannt werden. Ein typisches Beispiel hierfür wäre die Manchester-Kodierung zusammen mit der Überprüfung des Gleichstromanteils bzw. der maximalen Dauer zwischen Pegeländerungen. Zusätzlich oder unabhängig davon können Signalpegel und deren zeitliche Abfolge überprüft werden. Z.B. kann bei einer RZ-Kodierung (Return-to-Zero) davon ausgegangen werden, dass zwischen jedem Bit kurz ein Null-Pegel anliegt. Tritt auf der Signalleitung für ein längeres Intervall als eine vordefinierte Bitdauer kein Null-Pegel auf, ist das ein Indiz für eine Fehlfunktion. Bei per Definition differentiell arbeitenden Übertragungsstrecken (z.B. LVDS (Low Voltage Differential Signaling) oder CAN), muss der Mittelwert beider Signalleitungen, unabhängig von der Bitfolge, einen quasi konstanten Wert, zum Beispiel Spannungspegel von 0 Volt, die Hälfte der Betriebsspannung oder einer Alternative in Abhängigkeit von der jeweiligen Definition aufweisen. Unter dem Ausdruck "Feststellen eines Datenausfall durch Vergleich mit der bekannten Struktur des Normdatenstromes" wird verstanden, dass vorbekannte Informationen hinsichtlich des Normdatenstromes für den Vergleich herangezogen werden, und eine Abweichung von einem tatsächlich empfangenen Datenstrom zur Fehlererkennung herangezogen wird. Die Information kann sich dabei - wie bereits ausgeführt - auf unterschiedliche Layer (genauer gesagt wahlweise auf jeden einzelnen Layer) gemäß dem OSI-Modell beziehen. Eine Beschränkung auf eine bestimmte Kommunikationsebene ist nicht vorgesehen.

Auch könnte vorgesehen sein, dass auf höheren Datenkommunikationsebenen (bei manchen Protokollen OSI-Layer 4, typischer Weise OSI-Layer 5) die Integrität des Datenstroms überprüft wird. Die einfachste Form besteht in der Überprüfung von Headerinformationen (im einfachsten Fall Start und / oder Stopp-Bits, aber auch komplexere Bitmuster, die zusätzlich zu den Nutzdaten übertragen werden) oder der zeitlichen Abfolge von Datenpaketen. Ein Nachteil dieser einfachen Maßnahmen liegt darin, dass Fehler in den Nutzdaten nicht bemerkt werden, sondern blind darauf vertraut wird, dass ein fehlerfreier Header auch fehlerfreie Nutzdaten impliziert (was. i.A. nicht der Fall ist).

Weit verbreitet ist der Einsatz von CRCs (Cyclic Redundancy Checks), die auf Datenpakete fixer Länge angewendet werden. Da im vorliegenden Fall nur eine Fehlererkennung und keine Fehlerkorrektur benötigt wird, können vergleichsweise kurze CRCs, wie z.B. ein CRC-8 nach SAE-J1850, verwendet werden.

Ebenso denkbar und in Fällen, wo die Anwendung einen signierten Datenstrom erfordert sogar vorteilhaft, können (kryptografische) "Hashes" (dt.: Streuwertfunktion, eher ungebräuchlich) eingesetzt werden. Eine fehlerhafte Übertragung würde in einem derartigen System als korrumpierte Nachricht erkannt werden, wobei zwischen einer Fehlfunktion der Übertragungsstrecke und einer absichtlichen Manipulation des Dateninhalts nicht unterschieden werden kann. In vielen Anwendungsfällen kann das erfindungsgemäße Abtrennen der Datenübertragungsleitung jedoch in beiden Fällen die bevorzugte Reaktion sein.

In ähnlicher Weise kann ein mittels Block-Chiffren verschlüsselter Datenstrom ausgewertet werden. Solange die Klartextnachricht eine kurze bekannte Bitfolge enthält, muss nach der Entschlüsselung lediglich das Vorhandensein dieses "Magic Values" überprüft werden. In der verschlüsselten Form liegt die Information des Magic Values verschmiert über das gesamte Datenpaket vor. Ein Übertragungsfehler an beliebiger Stelle, verfälscht mit hoher Wahrscheinlichkeit auch den Magic Value und ist somit nach der Entschlüsselung auch lokalisiert im Magic Value erkennbar. Praktisch alle modernen, kryptografisch relevanten Chiffren, wie z.B. AES, Blowfish, 3DES, IDEA oder RC5 können dafür eingesetzt werden. Analog zu signierten Datenströmen kann auch hier nicht zwischen Teilausfall bzw. Ausfall und Manipulation unterschieden werden, was in den meisten Anwendungsfällen aber keine Einschränkung darstellt.

Unter Priorisierung der Daten wird primär eine Aufteilung in sicherheitsrelevante Daten und andere, sicherheitsirrelevante Daten verstanden. Darüber hinaus kann innerhalb der sicherheitsirrelevanten Daten eine graduelle Abstufung vorgenommen werden ("wichtiger" - "unwichtiger") sowie eine Unterscheidung in Daten, die im Notbetrieb verlustbehaftet komprimiert werden dürfen und solche die entweder unverfälscht oder gar nicht zu übertragen sind.

Insbesondere kann vorgesehen sein, dass für paketierbare Teile des Normdatenstromes im Fehlerfall eine Umlenkung gesamter Datenpakete erfolgt. Unter einem Datenpaket wird im Sinne dieser Anmeldung eine in sich geschlossene Informationseinheit verstanden. Ein Datenpaket kann z.B. ein "frame" eines Videosignals (also ein Bild) sein, oder auch Datenpakete, die einem Zeitintervall eines Datenstroms zugeordnet sind. Auch könnten Datenpakete durch eine spezielle Datenstruktur gekennzeichnet sein, z.B. jeweils ein Datenframe mit einem zugeordneten Datenheader und den Nutzdaten, welche die tatsächlich zu übertragende Information enthalten. Die Umlenkung der Daten erfolgt mittels der dafür vorgesehenen Schnittstellenweiche. Unter einer Schnittstellenweiche wird in diesem Dokument eine Vorrichtung verstanden, welche mit den beiden vorliegenden Datenverbindungsleitungen durch die jeweiligen Kommunikationsschnittstellen und der Überwachungseinheit verbunden und dazu ausgebildet ist, eine Umlenkung der Inhalte des Datenstroms und im Fehlerfall eine Abtrennung der jeweils defekten Datenverbindungsleitung zu erwirken. Im Normalzustand wird in, Abhängigkeit von der jeweiligen sender- bzw. empfängerseitigen Implementierung der Schnittstellenweichen, der Normdatenstrom entsprechend auf beide Datenverbindungsleitungen aufgeteilt bzw. werden die über die Datenverbindungsleitungen empfangenen Daten zu einem Normdatenstrom zusammengefügt. Im Fehlerzustand werden die entsprechenden Daten an die funktionstüchtige Leitung weitergeleitet und die fehlerbehaftete Leitung wird abgetrennt. Es kann vorgesehen sein, dass die Schnittstellenweiche im Fehlerfall eine Änderung der Inhalte des Normdatenstroms, unter Berücksichtigung der gewählten Art der Datenpriorisierung, durchführt.

Weiters kann vorgesehen sein, dass für nichtpaketierbare Teile des Normdatenstromes eine Umlenkung unter Anwendung eines Datenkomprimierungsverfahrens erfolgt, wobei die Übertragung der komprimierten Daten über die verbleibende intakte Datenverbindungsleitung mit Hilfe eines zeitlichen Multiplexverfahrens erfolgt. Für manche Datenstromformate kann eine ohnehin immer vorhandene Komprimierung verstärkt werden (z.B. mpeg/mp4 oder jpg ermöglichen variable, verlustbehaftete Komprimierung). Ebenso kann ein Wechsel von einer verlustfreien auf eine verlustbehaftete Komprimierungsmethode erfolgen, um die zu übertragene Datenmenge zu verringern. Sofern die Bedeutung der Nutzdaten bekannt ist, können anwendungsspezifische Komprimierungsverfahren Anwendung finden. Bei einer Lichtverteilung kann es z.B. sinnvoll sein, die Auflösung derart zu reduzieren, dass Dekomprimierungsartefakte niemals einen Pixel beziehungsweise einen Bereich heller machen (Blendungsgefahr), sondern schlimmstenfalls dunkler (geringere Performanz). Alternativ könnte ebenso vorgesehen sein, dass die Position von Hell-Dunkelgrenzen weiterhin exakt übertragen wird, Graduierungen im hellen Bereich dürfen jedoch verfälscht werden oder verloren gehen.

Insbesondere kann vorgesehen sein, dass die Übertragung von sicherheitsirrelevanten Daten im Fehlerfall vollständig weggelassen wird.

Erfindungsgemäß ist vorgesehen, dass bei Erkennung eines Fehlerfalles eine Sicherheitsroutine ausgelöst wird, im Zuge der, die von der fehlerhaften Übertragung betroffene Datenverbindungsleitung, mittels einer Schnittstellenweiche elektrisch von den beiden Fahrzeugkomponenten getrennt wird.

Insbesondere kann vorgesehen sein, dass die elektronische Steuereinheit der ersten Fahrzeugkomponente auch eine dritte und vierte Kommunikationsschnittstelle aufweist, sodass die erste Fahrzeugkomponente auch mit einer dritten Fahrzeugkomponente verbunden werden kann, wobei sich dritte und vierte Kommunikationsschnittstellen der ersten Fahrzeugkomponente in Bezug auf die dritte Fahrzeugkomponente, wie erste und zweite Kommunikationsschnittstelle in Bezug auf die zweite Fahrzeugkomponente, verhält.

Weiters kann vorgesehen sein, dass die erste Fahrzeugkomponente ein Lichtsteuergerät und die zweite und die dritte Fahrzeugkomponente jeweils ein durch das Lichtsteuergerät gesteuertes Lichtmodul eines Kraftfahrzeugscheinwerfers ist, wobei die Steuerung zur Festlegung der Lichtverteilung des Lichtmodules dient und auf Basis der zwischen dem Lichtsteuergerät und dem Lichtmodul ausgetauschten Daten erfolgt.

Insbesondere kann vorgesehen sein, dass die erste und die zweite Fahrzeugkomponente jeweils ein Lichtmodul, und die dritte Fahrzeugkomponente ein Lichtsteuergerät zur Steuerung der Lichtmodule ist, wobei die Steuerung zur Festlegung der Lichtverteilung des Lichtmodules dient und auf Basis der zwischen dem Lichtsteuergerät und dem Lichtmodul ausgetauschten Daten erfolgt.

Weiters kann vorgesehen sein, dass die Überwachungseinheit eine CPU ist. Die Überwachung kann also in einem eigenständigen Modul implementiert sein. Die Fahrzeugkomponente kann z.B. ein System, umfassend einen Fahrzeugscheinwerfer als auch die Überwachungseinheit, bzw. die elektronische Steuereinheit, sowie die entsprechenden Datenverbindungen, umfassen.

Erfindungsgemäß ist vorgesehen, dass sicherheitsrelevante Daten des Normdatenstroms, Daten zur Steuerung zumindest einer der folgenden Fahrzeugscheinwerferlichtfunktionen betreffen: {Positionslicht; Tagfahrlicht; statisches Abblendlicht; Fahrtrichtungsanzeiger}

Weiters kann vorgesehen sein, dass sicherheitsirrelevante Daten des Normdatenstroms, Daten zur Steuerung zumindest einer der folgenden Fahrzeugscheinwerferlichtfunktionen betreffen: {Kurvenlicht; Fernlicht; blendfreies Fernlicht; Abbiegelicht; Fahrspurmarkierung; Hindernis-/ Objektmarkierungslicht}

Erfindungsgemäß ist vorgesehen, dass die Datenverbindungsleitungen Teil eines Datenbussystems sind, wobei es sich dabei um ein CAN, CAN-FD oder automotive Ethernet Bussystem handelt.

Weiters kann vorgesehen sein, dass die Datenverbindungsleitungen zumindest zwei voneinander unterschiedliche Bussysteme aufweisen.

Insbesondere kann vorgesehen sein, dass das Vorhandensein eines festgestellten Fehlerzustandes dem Fahrzeuglenker durch eine geeignete Anzeige, zum Beispiel in Form eines Lichtsignals oder durch ein alternatives Mittel im Fahrzeuginnenraum, eine den Fehlerzustand anzeigende Information signalisiert wird.

Anders ausgedrückt, können Aspekte der Erfindung wie folgt beschrieben werden:
Es können zwei gleichartige oder sehr ähnliche Bussysteme (Link 1, Link 2) verwendet werden, die
- Im Normalbetrieb
   ∘ parallel betrieben werden und damit die Summe der Einzelbandbreiten zur Verfügung stellen (das beinhaltet auch das Aufteilen des Datenstroms auf die beiden physikalischen Kanäle).
   ∘ beide überwacht werden.
- Im Fehlerfall (ein Link fällt aus)
   ∘ die Daten so priorisiert werden, dass am verbleibenden funktionsfähigen Bus ausreichend Daten für einen "Notbetrieb" übertragen werden.
   ∘ der fehlerhafte Link so abgetrennt (isoliert) wird, dass das restliche System nicht weiter beeinträchtigt wird.
   ∘ die gesetzlichen Rahmenbedingungen eingehalten werden können.

Die Funktion des technischen Systems kann daher trotz Vorliegens eines Fehlers zumindest eingeschränkt aufrechterhalten werden.

Folgende Aspekte können dabei berücksichtigt werden:
Aufteilen: Bei paketorientierter Datenübertragung (z.B. Transmission Control Protocol/ Internet Protocol - artig oder CAN-frames) können die Pakte wie folgt aufgeteilt werden: Ein Paket über den ersten Link (also die Datenverbindungsleitung), ein anderes Paket über den zweiten Link, usw. Für nicht paketierte Datenströme (z.B. Rot-Grün-Blau-Informationen) können Standardverfahren der Nachrichtentechnik verwendet werden, wie z.B. Zeitmultiplex. In einer bevorzugten Ausgestaltung werden die Daten zuerst komprimiert, bevor ein Zeitmultiplexverfahren angewendet werden kann.
Überwachen: Wenn der Sender (Link Monitor) von sich aus erkennt, dass einer der beiden Busse defekt ist (z.B. kann das CAN-acknowledge-Bit nicht empfangen werden) kann sofort ein Linkfehler signalisiert und ein Fehlermodus aktiviert werden. Ist das nicht möglich, weil der Link 1 am physical layer aus Sichtweise des Senders korrekt funktioniert, die Daten aber dennoch korrupt empfangen werden, hat die ECU2 (sog. elektronische Kontrolleinheit "electronic control unit", die Teil der elektronischen Steuereinheit einer Fahrzeugkomponente sein kann) bzw. deren Link-Monitor die Möglichkeit, den Fehlerzustand über den höchstwahrscheinlich nicht betroffenen Kanal an die ECU1 (die also Teil der elektronischen Einheit der anderen Fahrzeugkomponente sein kann) zurück zu melden, wobei der Link-Monitor in eben dieser, dann in den Fehlermodus wechselt und Link 1 still legt.
Priorisieren: Es kann eine vorab festgelegte "Markierung" der Daten geben, die im Fehlerfall weiterhin übertragen werden müssen. Das können z.B. priorisierte Datenpakete sein (von der CPU als solche markiert) oder fixe Teile des Datenstroms (nur jedes 2. Pixel oder nur jeder 2. Frame). Nicht priorisierte Daten werden im Fehlerfall nicht übertragen und gehen verloren. Ebenso ist eine graduelle Abstufung der Priorisierungen denkbar, bei der die sicherheitsrelevanten Daten mit höchster Priorität versehen werden. In diesem Fall können gegebenenfalls ebenso Daten übertragen werden, welche zwar als sicherheitsirrelevant klassifiziert werden, aber dennoch als zum Beispiel relevant für die Verkehrssicherheit angesehen werden können.
Isolieren: Diese Aktion beinhaltet:
   1. Vorliegen und Übertragen von Information der empfangenden ECU (genau genommen deren Link-Monitor) über den Ausfall und das Stilllegen eines Links.
   2. Elektrische und / oder physikalische Isolierung des Links durch eine Schnittstellenweiche, sodass Kurzschlüsse oder auch Überspannungen die Funktion der ECUs und des verbleibenden Links nicht beeinträchtigen können. Diese Isolierung kann sender- und / oder empfängerseitig erfolgen, in Abhängigkeit des gewählten Fehlerdetektionsverfahrens.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung von Komponenten, die in dem erfindungsgemäßen Verfahren Anwendung finden,
Figur 2 eine alternative Konstellation der Komponenten, und
Figur 3 eine weitere alternative Konstellation der Komponenten zur Anwendung des erfindungsgemäßen Verfahrens.

In den folgenden Figuren bezeichnen - sofern nicht anders angegeben - gleiche Bezugszeichen gleiche Merkmale.

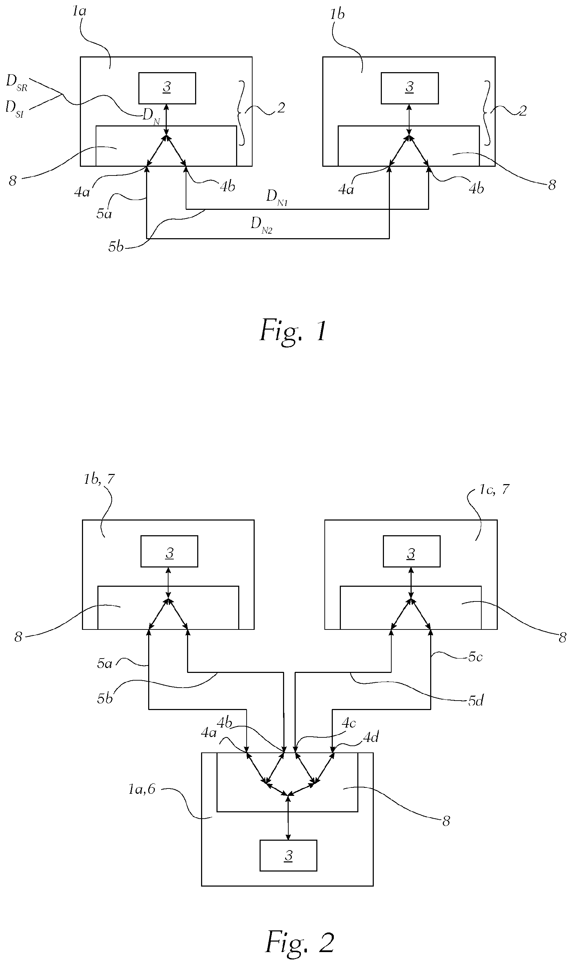

Figur 1 zeigt eine schematische Darstellung von Komponenten, die in dem erfindungsgemäßen Verfahren Anwendung finden. Dieses Verfahren betrifft die Datenübertragung zwischen zumindest zwei digital steuerbaren Fahrzeugkomponenten 1a und 1b, umfassend eine erste und eine zweite Fahrzeugkomponente, wobei jede Fahrzeugkomponente eine elektronische Steuereinheit 2 mit einer Überwachungseinheit 3, zwei Kommunikationsschnittstellen 4a, 4b, nämlich einer ersten und einer zweiten Kommunikationsschnittstelle und eine Schnittstellenweiche 8 aufweist.

Die Überwachungseinheit 3 ist zur Überwachung der Kommunikationsschnittstellen eingerichtet, wobei die beiden Fahrzeugkomponenten 1a und 1b zum Austausch von Daten miteinander verbunden sind, indem zwei Datenverbindungsleitungen 5a und 5b vorgesehen sind. Die ersten Kommunikationsschnittstellen 4a sind durch eine erste Datenverbindungsleitung 5a und die zweiten Kommunikationsschnittstellen 4b sind durch eine zweite Datenverbindungsleitung 5b miteinander verbunden. Das Verfahren umfasst die folgenden Schritte:
a) Laufendes Überprüfen der Datenverbindung zwischen den Fahrzeugkomponenten mittels den dafür vorgesehenen Überwachungseinheiten 3 und Unterscheiden zwischen einem Normalzustand und einem Fehlerzustand, wobei in einem Normalzustand beide Datenverbindungsleitungen 5a, 5b mit ihrer Nennbandbreite zur Verfügung stehen und in einem Fehlerzustand der Datenaustausch über eine der beiden Datenverbindungsleitungen 5a, 5b mangels Bestehens einer Datenverbindung ausfällt,
b) bei Feststellen von Normalzustand, Aufteilen eines zwischen den Fahrzeugkomponenten 1a und 1b auszutauschenden Normdatenstromes D_{N} auf die beiden Datenverbindungsleitungen 5a und 5b mittels der Schnittstellenweiche 8, um die Bandbreite beider Datenverbindungsleitungen 5a und 5b gleichzeitig zu nutzen und eine etwaige Einschränkung, insbesondere einen Ausfall, einer Datenverbindungsleitung 5a und 5b aufgrund der Feststellung eines Datenausfalles sofort feststellbar zu machen, wobei der Normdatenstrom sicherheitsrelevante Daten D_{SR} als auch sicherheitsirrelevante Daten D_{SI} umfasst, und bei den Fahrzeugkomponenten Informationen hinsichtlich der Struktur des Normdatenstromes vorliegen, sodass ein Datenausfall durch Vergleich mit der bekannten Struktur des Normdatenstromes festgestellt wird,
c) bei Feststellen eines Fehlerzustandes einer Datenverbindungsleitung, Entbindung der fehlerhaften Datenverbindungsleitung 5a, 5b von der Übertragung des Normdatenstromes D_{N} durch Änderung der Aufteilung mittels der Schnittstellenweiche 8 und Änderung der Ansteuerung der verbleibenden Datenverbindungsleitung 5a, 5b dahingehend, dass die Übertragung der sicherheitsrelevanten Daten D_{SR} gegenüber der Übertragung der sicherheitsirrelevanten Daten D_{SI} priorisiert wird.

Fig. 2 zeigt eine Weiterbildung des Verfahrens, in der die elektronische Steuereinheit 2 der ersten Fahrzeugkomponente 1a auch eine dritte 4c und vierte Kommunikationsschnittstelle 4d aufweist, sodass die erste Fahrzeugkomponente 1a auch mit einer dritten Fahrzeugkomponente 1c verbunden werden kann, wobei sich dritte 4c und vierte 4d Kommunikationsschnittstellen der ersten Fahrzeugkomponente 1a in Bezug auf die dritte Fahrzeugkomponente 1c, wie die erste 4a und zweite 4b Kommunikationsschnittstelle in Bezug auf die zweite Fahrzeugkomponente 1b, verhält.

Insbesondere kann dabei vorgesehen sein, dass die erste Fahrzeugkomponente 1a ein Lichtsteuergerät 6 ist und die zweite und die dritte Fahrzeugkomponente 1b und 1c jeweils ein durch das Lichtsteuergerät gesteuertes Lichtmodul 7 eines Kraftfahrzeugscheinwerfers ist, wobei die Steuerung zur Festlegung der Lichtverteilung des Lichtmodules 7 dient und auf Basis der zwischen dem Lichtsteuergerät 6 und dem Lichtmodul 7 ausgetauschten Daten erfolgt.

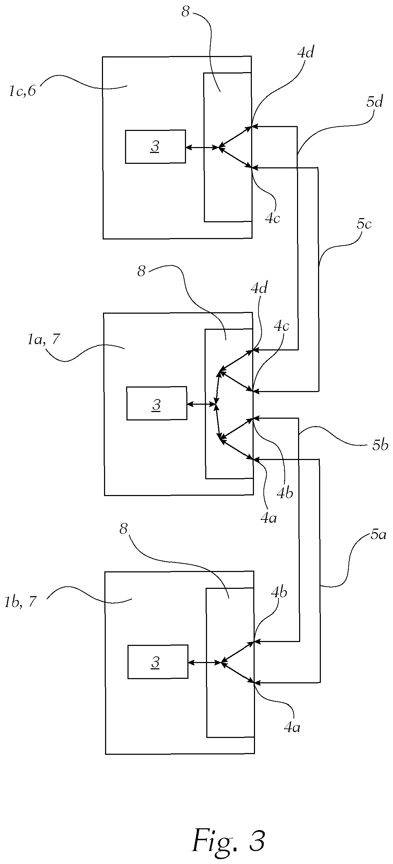

Figur 3 zeigt eine alternative Variante der Erfindung, in der die erste und die zweite Fahrzeugkomponente 1a, 1b jeweils ein Lichtmodul 7 ist und die dritte Fahrzeugkomponente 1c ein Lichtsteuergerät 6 zur Steuerung der Lichtmodule ist, wobei die Steuerung zur Festlegung der Lichtverteilung des Lichtmodules 7 bzw. der Lichtmodule 7 dient und auf Basis der zwischen dem Lichtsteuergerät 6 und dem Lichtmodul 7 bzw. den Lichtmodulen 7 ausgetauschten Daten erfolgt.

Wie in der nachfolgenden Tabelle beschrieben, können bei Ausfall eines Busses, mittels des erfindungsgemäßen Verfahrens, gesetzlich vorgeschriebenen Funktionen weiter betrieben werden. Durch optimale Nutzung der Bandbreite kann über den verbleibenden Bus bzw. die verbleibende Datenverbindungsleitung mehr als 50% der Funktionalität abgebildet werden.

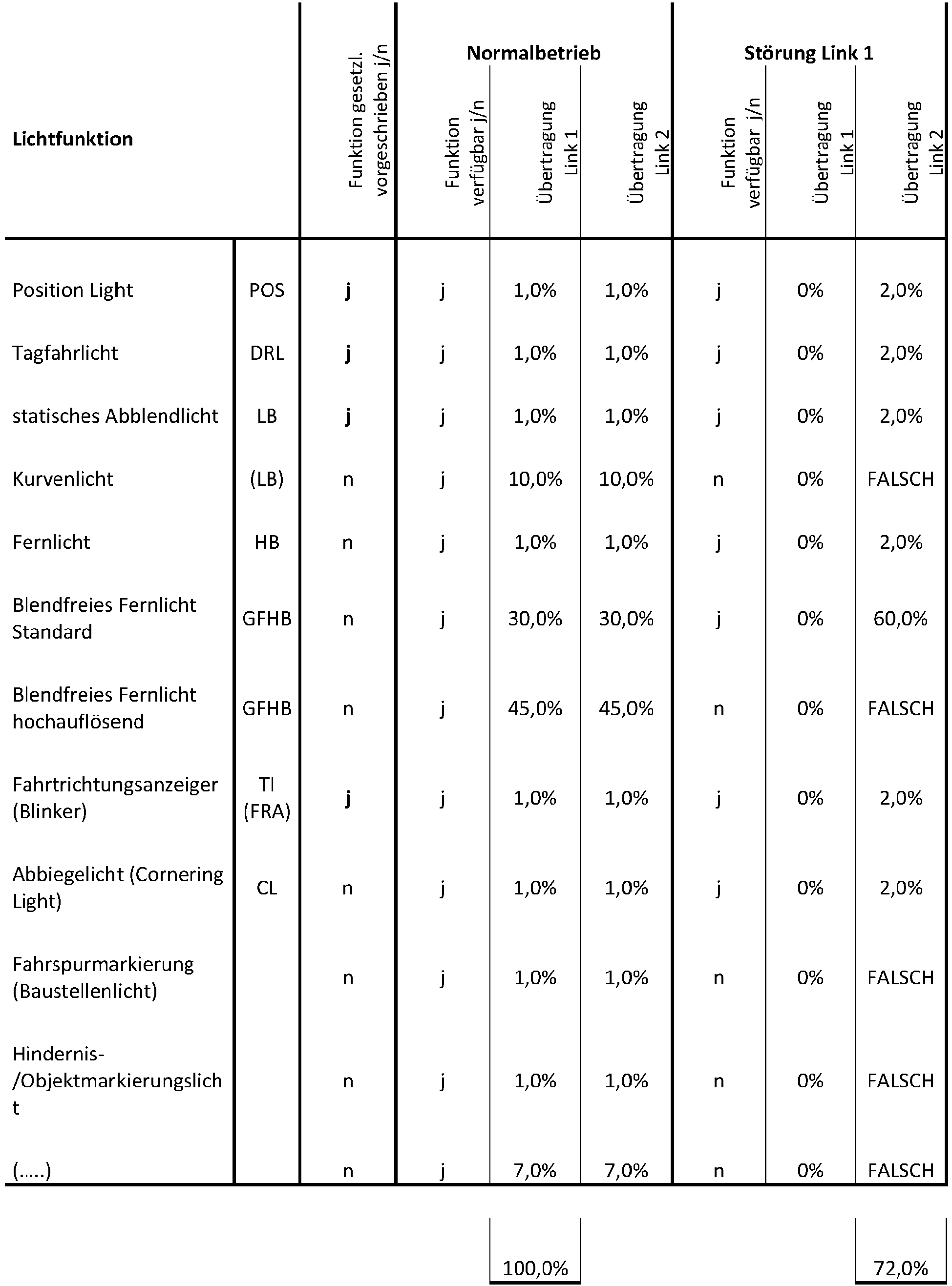

Die Daten, die gesetzlich vorgeschriebenen Funktionen betreffen, sind vorzugsweise allesamt sicherheitsrelevante Daten D_{SR} im Sinne der vorliegenden Erfindung, die verbleibenden Daten können als sicherheitsirrelevante Daten D_{SI} eingestuft werden.

In einer besonders bevorzugten Ausführungsform kann vorgesehen sein, dass die Information über das Vorliegen eines Fehlerfalls durch ein Lichtsignal, ein Anzeigesystem oder ein alternatives Mittel dem Kraftfahrzeuglenker signalisiert wird.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Verfahren zur Datenübertragung zwischen zumindest zwei digital steuerbaren Fahrzeugkomponenten (1a, 1b, 1c), wobei jede Fahrzeugkomponente (1a, 1b, 1c) eine elektronische Steuereinheit (2) mit
- einer Überwachungseinheit (3),
- zwei Kommunikationsschnittstellen (4a, 4b), nämlich einer ersten und einer zweiten Kommunikationsschnittstelle und
- einer Schnittstellenweiche (8) zur Festlegung einer Aufteilung der zu übertragenden Daten zwischen den Kommunikationsschnittstellen (4a, 4b), aufweist,
wobei die Überwachungseinheit (3) zur Überwachung der Kommunikationsschnittstellen (4a, 4b) eingerichtet ist, wobei die zumindest zwei Fahrzeugkomponenten (1a, 1b, 1c) zum Austausch von Daten miteinander verbunden sind, indem zwischen den Fahrzeugkomponenten jeweils zwei Datenverbindungsleitungen (5a, 5b) vorgesehen sind, wobei die ersten Kommunikationsschnittstellen (4a) durch eine erste Datenverbindungsleitung (5a) und die zweiten Kommunikationsschnittstellen (4b) durch eine zweite Datenverbindungsleitung (5b) miteinander verbunden sind, umfassend die folgenden Schritte:
a) Laufendes Überprüfen der Datenverbindung zwischen den Fahrzeugkomponenten mittels den dafür vorgesehenen Überwachungseinheiten (3) und Unterscheiden zwischen einem Normalzustand und einem Fehlerzustand, wobei in einem Normalzustand beide Datenverbindungsleitungen (5a, 5b) mit ihrer Nennbandbreite zur Verfügung stehen, und in einem Fehlerzustand der Datenaustausch über eine der beiden Datenverbindungsleitungen (5a, 5b) mangels Bestehens einer Datenverbindung ausfällt,
b) bei Feststellen von Normalzustand Aufteilen eines zwischen den Fahrzeugkomponenten (1a, 1b, 1c) auszutauschenden Normdatenstromes (D_{N}) auf die beiden Datenverbindungsleitungen (5a, 5b) mittels der Schnittstellenweiche (8), um die Bandbreite beider Datenverbindungsleitungen (5a, 5b) gleichzeitig zu nutzen und einen etwaige Ausfall einer Datenverbindungsleitung (5a, 5b) aufgrund der Feststellung eines Datenausfalles sofort feststellbar zu machen, wobei der Normdatenstrom sicherheitsrelevante Daten (D_{SR}) als auch sicherheitsirrelevante Daten (D_{SI}) umfasst und bei den Fahrzeugkomponenten Informationen hinsichtlich der Struktur des Normdatenstromes vorliegen, sodass ein Datenausfall durch Vergleich mit der bekannten Struktur des Normdatenstromes festgestellt wird,
c) beim Feststellen des Fehlerzustandes einer Datenverbindungsleitung, Entbindung der fehlerhaften Datenverbindungsleitung (5a, 5b) von der Übertragung des Normdatenstromes (D_{N}) durch Änderung der Aufteilung mittels der Schnittstellenweiche (8) und Änderung der Ansteuerung der verbleibenden Datenverbindungsleitung (5a, 5b) dahingehend, dass die Übertragung der sicherheitsrelevanten Daten (D_{SR}) gegenüber der Übertragung der sicherheitsirrelevanten Daten (Dsi) priorisiert wird,
wobei bei Feststellen des Fehlerzustandes eine Sicherheitsroutine ausgelöst wird, im Zuge der die von der fehlerhaften Übertragung betroffene Datenverbindungsleitung elektrisch von den betreffenden Fahrzeugkomponenten (1a, 1b) getrennt wird, wobei die Datenverbindungsleitungen (5a, 5b, 5c, 5d) Teil eines Datenbussystems sind, wobei es sich dabei um ein CAN, CAN-FD oder automotive Ethernet Bussystem handelt, wobei sicherheitsrelevante Daten des Normdatenstroms (D_{N}) Daten zur Steuerung zumindest einer der folgenden Fahrzeugscheinwerferlichtfunktionen betreffen: {Positionslicht; Tagfahrlicht; statisches Abblendlicht; Fahrtrichtungsanzeiger}.

2. Verfahren nach Anspruch 1, wobei für paketierbare Teile des Normdatenstromes (D_{N}) im Fehlerfall eine Umlenkung gesamter Datenpakete erfolgt.

3. Verfahren nach einem der vorhergehenden Ansprüche, wobei für nichtpaketierbare Teile des Normdatenstromes (D_{N}) eine Umlenkung unter Anwendung eines Datenkomprimierungsverfahrens erfolgt, wobei die Übertragung der komprimierten Daten über die verbleibende intakte Datenverbindungsleitung mit Hilfe eines zeitlichen Multiplexverfahrens erfolgt.

4. Verfahren nach einem der vorhergehenden Ansprüche, wobei die Übertragung von sicherheitsirrelevanten Daten (D_{SI}) im Fehlerfall vollständig weggelassen wird.

5. Verfahren nach einem der vorhergehenden Ansprüche, wobei zumindest eine erste, eine zweite und eine dritte Fahrzeugkomponente (1a, 1b, 1c) vorgesehen sind, und die elektronische Steuereinheit (2) der ersten Fahrzeugkomponente (1a) auch eine dritte (4c) und vierte (4d) Kommunikationsschnittstelle aufweist, sodass die erste Fahrzeugkomponente (1a) auch mit einer dritten Fahrzeugkomponente (1c) verbunden werden kann, wobei sich dritte (4c) und vierte (4d) Kommunikationsschnittstellen der ersten Fahrzeugkomponente (1a) in Bezug auf die dritte Fahrzeugkomponente (1c), wie erste (4a) und zweite (4b) Kommunikationsschnittstellen in Bezug auf die zweite Fahrzeugkomponente (1b), verhalten.

6. Verfahren nach Anspruch 5, wobei die erste Fahrzeugkomponente (1a) ein Lichtsteuergerät ist und die zweite und die dritte Fahrzeugkomponente (1b, 1c) jeweils ein durch das Lichtsteuergerät (6) gesteuertes Lichtmodul (7) eines Kraftfahrzeugscheinwerfers ist, wobei die Steuerung zur Festlegung der Lichtverteilung des Lichtmodules (7) dient und auf Basis der zwischen dem Lichtsteuergerät (6) und dem Lichtmodul (7) ausgetauschten Daten erfolgt.

7. Verfahren nach Anspruch 6, wobei die erste und die zweite Fahrzeugkomponente (1a, 1b) jeweils ein Lichtmodul ist und die dritte Fahrzeugkomponente (1c) ein Lichtsteuergerät (6) zur Steuerung der Lichtmodule (7) ist, wobei die Steuerung zur Festlegung der Lichtverteilung des Lichtmodules (7) dient und auf Basis der zwischen dem Lichtsteuergerät (6) und dem Lichtmodul (7) ausgetauschten Daten erfolgt.

8. Verfahren nach einem der vorhergehenden Ansprüche, wobei die Überwachungseinheit (3) eine CPU ist.

9. Verfahren nach einem der vorhergehenden Ansprüche, wobei sicherheitsirrelevante Daten des Normdatenstroms (D_{N}) Daten zur Steuerung zudem zumindest einer der folgenden Fahrzeugscheinwerferlichtfunktionen betreffen: {Kurvenlicht; Fernlicht; blendfreies Fernlicht; Abbiegelicht; Fahrspurmarkierung; Hindernis-/Objektmarkierungslicht}

10. Verfahren nach einem der vorhergehenden Ansprüche, wobei zumindest zwei der Datenverbindungsleitungen (5a, 5b, 5c, 5d) sich voneinander unterscheiden, indem unterschiedliche Bussysteme eingesetzt werden.

11. Verfahren nach einem der vorhergehenden Ansprüche, wobei das Vorhandensein des festgestellten Fehlerzustandes dem Fahrzeuglenker durch eine geeignete Anzeige zum Beispiel in Form eines Lichtsignals oder durch ein alternatives Mittel im Fahrzeuginnenraum eine den Fehlerzustand anzeigende Information signalisiert wird.

## Claims

1. Method for data transmission between at least two digitally controllable vehicle components (1a, 1b, 1c), each vehicle component (1a, 1b, 1c) comprising an electronic control unit (2) with
- a monitoring unit (3),
- two communication interfaces (4a, 4b), namely a first and a second communication interface, and
- an interface switch (8) for determining a division of the data to be transmitted between the communication interfaces (4a, 4b),
the monitoring unit (3) being set up to monitor the communication interfaces (4a, 4b), the at least two vehicle components (1a, 1b, 1c) being connected to one another for the purpose of exchanging data by providing two data connection lines (5a, 5b) in each case between the vehicle components, the first communication interfaces (4a) being connected to one another by a first data connection line (5a) and the second communication interfaces (4b) being connected to one another by a second data connection line (5b), comprising the following steps:
a) continuously checking the data connection between the vehicle components by means of the monitoring units (3) provided for this purpose and distinguishing between a normal state and an error state, wherein in a normal state both data connection lines (5a, 5b) are available with their nominal bandwidth, and in an error state the data exchange via one of the two data connection lines (5a, 5b) fails for lack of existence of a data connection,
b) when a normal state is detected, dividing a standard data stream (DN) to be exchanged between the vehicle components (1a, 1b, 1c) between the two data link lines (5a, 5b) by means of the interface switch (8) in order to use the bandwidth of both data link lines (5a, 5b) simultaneously and to prevent any failure of a data link line (5a, 5b) can be detected immediately on the basis of the detection of a data failure, the standard data stream comprising safety-relevant data (DSR) and also non-safety-relevant data (DSI) and information being available at the vehicle components with regard to the structure of the standard data stream, so that a data failure is detected by comparison with the known structure of the standard data stream,
c) when the fault state of a data link is detected, disconnecting the faulty data link (5a, 5b) from the transmission of the standard data stream (DN) by changing the splitting by means of the interface switch (8) and changing the activation of the remaining data link (5a, 5b) such that the transmission of the safety-related data (DSR) is prioritized over the transmission of the safety-irrelevant data (DSI),
wherein, when the fault state is detected, a safety routine is triggered in the course of which the data link affected by the faulty transmission is electrically disconnected from the vehicle components (1a, 1b) concerned, wherein the data links (5a, 5b, 5c, 5d) are part of a data bus system, this being a CAN, CAN-FD or automotive Ethernet bus system, wherein safety-relevant data of the standard data stream (DN) concern data for controlling at least one of the following vehicle headlamp lighting functions: {position light; daytime running light; static low beam; direction indicator} .

2. Method according to claim 1, wherein for packetizable parts of the standard data stream (DN) a redirection of entire data packets takes place in the event of a fault.

3. Method according to one of the preceding claims, wherein for non-packetizable parts of the standard data stream (DN) a redirection takes place using a data compression method, wherein the transmission of the compressed data takes place via the remaining intact data link line with the aid of a time multiplex method.

4. Method according to any of the preceding claims, wherein the transmission of safety-irrelevant data (DSI) is completely omitted in the event of a fault.

5. Method according to one of the preceding claims, wherein at least a first, a second and a third vehicle component (1a, 1b, 1c) are provided, and the electronic control unit (2) of the first vehicle component (1a) also has a third (4c) and fourth (4d) communication interface, so that the first vehicle component (1a) can also be connected to a third vehicle component (1c), wherein third (4c) and fourth (4d) communication interfaces of the first vehicle component (1a) with respect to the third vehicle component (1c) behave like first (4a) and second (4b) communication interfaces with respect to the second vehicle component (1b).

6. Method according to claim 5, wherein the first vehicle component (1a) is a light control unit and the second and third vehicle components (1b, 1c) are each a light module (7) of a motor vehicle headlamp controlled by the light control unit (6), wherein the control serves to determine the light distribution of the light module (7) and takes place on the basis of the data exchanged between the light control unit (6) and the light module (7).

7. Method according to claim 6, wherein the first and second vehicle components (1a, 1b) are each a light module and the third vehicle component (1c) is a light control unit (6) for controlling the light modules (7), wherein the control serves to determine the light distribution of the light module (7) and takes place on the basis of the data exchanged between the light control unit (6) and the light module (7).

8. Method according to any one of the preceding claims, wherein the monitoring unit (3) is a CPU.

9. Method according to any one of the preceding claims, wherein safety-relevant data of the standard data stream (DN) concern data for controlling, in addition, at least one of the following vehicle headlight lighting functions: {curve light; high beam; glare-free high beam; turning light; lane marking light; obstacle/object marking light} .

10. Method according to any one of the preceding claims, wherein at least two of the data link lines (5a, 5b, 5c, 5d) differ from each other by using different bus systems.

11. Method according to one of the preceding claims, wherein the presence of the detected fault condition is signaled to the vehicle driver by a suitable display, for example in the form of a light signal, or by an alternative means in the vehicle interior of information indicating the fault condition.

## Revendications

1. Procédé de transmission de données entre au moins deux composants de véhicule (1a, 1b, 1c) à commande numérique, chaque composant de véhicule (1a, 1b, 1c) comprenant une unité de commande électronique (2) avec
- une unité de surveillance (3),
- deux interfaces de communication (4a, 4b), à savoir une première et une deuxième interface de communication et
- un aiguillage d'interface (8) pour définir une répartition des données à transmettre entre les interfaces de communication (4a, 4b),
l'unité de surveillance (3) étant conçue pour surveiller les interfaces de communication (4a, 4b), les au moins deux composants de véhicule (1a, 1b, 1c) étant reliés entre eux pour l'échange de données en prévoyant respectivement deux lignes de liaison de données (5a, 5b) entre les composants de véhicule, les premières interfaces de communication (4a) étant reliées entre elles par une première ligne de liaison de données (5a) et les secondes interfaces de communication (4b) par une seconde ligne de liaison de données (5b), comprenant les étapes suivantes :
a) contrôle permanent de la liaison de données entre les composants du véhicule au moyen des unités de surveillance (3) prévues à cet effet et distinction entre un état normal et un état d'erreur, les deux lignes de liaison de données (5a, 5b) étant disponibles avec leur largeur de bande nominale dans un état normal et l'échange de données via l'une des deux lignes de liaison de données (5a, 5b) étant défaillant faute d'existence d'une liaison de données dans un état d'erreur,
b) en cas de constatation d'un état normal, répartition d'un flux de données normalisé (DN) à échanger entre les composants du véhicule (1a, 1b, 1c) sur les deux lignes de liaison de données (5a, 5b) au moyen de l'aiguillage d'interface (8), afin d'utiliser simultanément la largeur de bande des deux lignes de liaison de données (5a, 5b) et de compenser une éventuelle défaillance d'une ligne de liaison de données (5a, 5b) en raison de la constatation d'une défaillance de données, le flux de données normalisé comprenant des données relatives à la sécurité (DSR) ainsi que des données non relatives à la sécurité (DSI) et des informations concernant la structure du flux de données normalisé étant disponibles au niveau des composants du véhicule, de sorte qu'une défaillance de données est constatée par comparaison avec la structure connue du flux de données normalisé,
c) lors de la constatation de l'état d'erreur d'une ligne de liaison de données, libération de la ligne de liaison de données (5a, 5b) défectueuse de la transmission du flux de données normalisé (DN) par modification de la répartition au moyen de l'aiguillage d'interface (8) et modification de la commande de la ligne de liaison de données (5a, 5b) restante de manière à ce que la transmission des données importantes pour la sécurité (DSR) soit prioritaire par rapport à la transmission des données non importantes pour la sécurité (DSI),
dans lequel, en cas de constatation de l'état d'erreur, une routine de sécurité est déclenchée, au cours de laquelle la ligne de liaison de données concernée par la transmission erronée est déconnectée électriquement des composants de véhicule (1a, 1b) concernés, dans lequel les lignes de liaison de données (5a, 5b, 5c, 5d) font partie d'un système de bus de données, dans lequel il s'agit d'un système de bus CAN, CAN-FD ou Ethernet automotive, dans lequel les données pertinentes pour la sécurité du flux de données normalisé (DN) concernent des données pour la commande d'au moins une des fonctions de phares de véhicule suivantes : {feux de position ; feux de jour ; feux de croisement statiques ; indicateurs de direction} .

2. Procédé selon la revendication 1, dans lequel, pour des parties du flux de données normalisées (DN) pouvant être mises en paquets, une déviation de paquets de données complets est effectuée en cas d'erreur.

3. Procédé selon l'une des revendications précédentes, dans lequel, pour des parties non paquetisables du flux de données normalisé (DN), une déviation est effectuée en utilisant un procédé de compression de données, la transmission des données comprimées étant effectuée sur la ligne de liaison de données intacte restante à l'aide d'un procédé de multiplexage temporel.

4. Procédé selon l'une des revendications précédentes, dans lequel la transmission de données relatives à la sécurité (DSI) est complètement omise en cas d'erreur.

5. Procédé selon l'une des revendications précédentes, dans lequel au moins un premier, un deuxième et un troisième composants de véhicule (1a, 1b, 1c) sont prévus, et l'unité de commande électronique (2) du premier composant de véhicule (1a) présente également une troisième (4c) et une quatrième (4d) interface de communication, de sorte que le premier composant (1a) du véhicule peut également être connecté à un troisième composant (1c) du véhicule, les troisième (4c) et quatrième (4d) interfaces de communication du premier composant (1a) du véhicule par rapport au troisième composant (1c) du véhicule se comportant comme les première (4a) et deuxième (4b) interfaces de communication par rapport au deuxième composant (1b) du véhicule.

6. Procédé selon la revendication 5, dans lequel le premier composant (1a) du véhicule est un appareil de commande de l'éclairage et les deuxième et troisième composants (1b, 1c) du véhicule sont chacun un module d'éclairage (7) d'un projecteur de véhicule automobile commandé par l'appareil de commande de l'éclairage (6), la commande servant à déterminer la répartition de la lumière du module d'éclairage (7) et étant effectuée sur la base des données échangées entre l'appareil de commande de l'éclairage (6) et le module d'éclairage (7).

7. Procédé selon la revendication 6, dans lequel le premier et le deuxième composants (1a, 1b) du véhicule sont chacun un module d'éclairage et le troisième composant (1c) du véhicule est un appareil de commande d'éclairage (6) pour la commande des modules d'éclairage (7), la commande servant à déterminer la répartition de la lumière du module d'éclairage (7) et s'effectuant sur la base des données échangées entre l'appareil de commande d'éclairage (6) et le module d'éclairage (7).

8. Procédé selon l'une quelconque des revendications précédentes, dans lequel l'unité de contrôle (3) est une unité centrale.

9. Procédé selon l'une des revendications précédentes, dans lequel des données du flux de données normalisées (DN) relatives à la sécurité concernent des données pour la commande en outre d'au moins une des fonctions d'éclairage de véhicule suivantes : {feux de virage ; feux de route ; feux de route non éblouissants ; feux de virage ; marquage de voie ; feux de marquage d'obstacle/d'objet} .

10. Procédé selon l'une quelconque des revendications précédentes, dans lequel au moins deux des lignes de liaison de données (5a, 5b, 5c, 5d) diffèrent l'une de l'autre en utilisant des systèmes de bus différents.

11. Procédé selon l'une des revendications précédentes, dans lequel la présence de l'état de défaut constaté est signalée au conducteur du véhicule par un affichage approprié, par exemple sous la forme d'un signal lumineux, ou par un moyen alternatif dans l'habitacle du véhicule, une information indiquant l'état de défaut.
